# EUROPÄISCHE PATENTSCHRIFT

(11) **EP 2 512 870 B1**
(45) Veröffentlichungstag und Bekanntmachung des Hinweises auf die Patenterteilung: **28.08.2013**
(21) Anmeldenummer: 10790909.5
(22) Anmeldetag: 26.11.2010
(51) Int. Cl.: B60R 16/023, G01S 15/93

(54) **VERFAHREN UND VORRICHTUNG ZUR AKTIVEN ERFASSUNG VON OBJEKTEN UNTER BERÜCKSICHTIGUNG VORANGEHENDER ERFASSUNGSERGEBNISSE**
METHOD AND SYSTEM FOR DETECTING OBJECTS TAKING INTO ACCOUNT PREVIOUS DETECTION RESULTS
MÉTHODE ET DISPOSITIF POUR LA DÉTECTION D'OBJETS PRENNANT EN COMPTE LES RÉSULTATS DE DÉTECTION PRÉCEDENTS

(30) Priorität: 15.12.2009 DE 102009054664
(43) Veröffentlichungstag der Anmeldung: 24.10.2012
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2010/068306
(87) Internationale Veröffentlichungsnummer: WO 2011/082888

(56) Entgegenhaltungen:
- EP-A2- 1 231 481
- DE-A1- 4 103 069
- DE-A1-102006 041 529
- US-A1- 2006 071 764

## Beschreibung

### Technisches Gebiet

Die Erfindung betrifft Objekterfassungsvorrichtungen, wie sie insbesondere im Kraftfahrzeugbereich verwendet werden. Die Erfindung ist insbesondere zum Einsatz für Ultraschall basierte Objekterfassungen geeignet.

### Stand der Technik

Bei Fahrerassistenzsystemen, Einparkhilfen und Abstandswarnsystemen für Kraftfahrzeuge werden üblicherweise Signale aktiv in die Umgebung gesendet, um anhand der reflektierten Wellen auf Objekte innerhalb der Umgebung schließen zu können. Neben mikrowellenbasierten Systemen bestehen auf Ultraschall basierende Sensoren, bei denen ein Wandler Schallwellen abgibt, wobei die von der Umgebung zurückgestrahlten Schallwellen erfasst werden. Beispielsweise anhand der Laufzeit wird dann auf einen Abstand geschlossen, in dem ein Reflektionsobjekt zum Wandler angeordnet ist.

Die EP 1 231 481 A offenbart ein Verfahren zum Erfassen eines Objekts innerhalb einer Umgebung eines Fahrzeugs mit den Schritten: Wiederholtes Senden von Sende-Wellenpulsen in die Umgebung; Wiederholtes Empfangen von Empfangs-Wellenpulsen, die den von dem Objekt reflektierten Sende-Wellenpulsen entsprechen; Erfassen des Objekts anhand einer Signaldarstellung der Empfangs-Wellenpulse, und Ermitteln zumindest einer Signaleigenschaft eines ersten Empfangs-Wellenpulses.

Als begrenzender Faktor für die Leistungsfähigkeit der Objekterfassung, insbesondere der Reichweite, ist das Signal/Rauschverhältnis anzusehen. Besonders präzise Verarbeitung erfordert jedoch kostspielige Komponenten und insbesondere eine hoch auflösende und somit aufwändige Signalverarbeitung. Um Rauschleistung besser von der Signalleitung trennen zu können werden beispielsweise Stellen des empfangenen Pulses unterdrückt, von denen auszugehen ist, dass diese kein Nutzsignal enthalten. Eine bekannte Vorgehensweise ist es, einen Anfangsabschnitt eines Empfangspulses zu unterdrücken oder auf null zu setzen, der einen gewissen Mindestabstand, beispielsweise 10 cm entspricht. Dadurch werden Reflektionskomponenten unterdrückt, die von äußeren Komponenten des Fahrzeugs selbst stammen können. Eine weitere Vorgehensweise ist es, einen Schwellwert zu verwenden, und das Signal zu unterdrücken, wenn dieses kleiner als der Schwellwert ist. Beispielsweise während Echoberuhigungszeiten werden somit Signalanteile unterdrückt, die keine Nutzsignalanteile ent-halten. Hierbei bestehen Verfahren gemäß dem Stand der Technik, bei denen ein konstant vorgegebener Schwellwert verwendet wird, der sich oberhalb eines allgemein angenommenen Rauschpegel befindet und ab dem das Signal als ein Signal angesehen wird, welches Nutzsignalanteile enthält. Diese Vorgehensweise zur pauschalen Unterdrückung von Signalanteilen, die als Steuersignale angesehen werden, führt jedoch zu einer beschränkten Leistungsfähigkeit.

Es ist daher eine Aufgabe der Erfindung, ein Verfahren und eine Vorrichtung vorzusehen, mit dem die Leistungsfähigkeit von Ortungssystemen für Fahrzeuge verbessert werden kann.

### Offenbarung der Erfindung

Diese Aufgabe wird gelöst durch das Verfahren und die Vorrichtung gemäß den unabhängigen Ansprüchen.

Die Erfindung ermöglicht eine selektivere und somit effizientere Unterscheidung von Nutzsignalen von Rauschanteilen und führt somit zu einem besseren Signal/Rauschverhältnis. Die sich ergebende Ortung ist daher präziser und weist insbesondere eine höhere Reichweite auf, da durch das höhere Signal/Rauschverhältnis größere Entfernungen abgedeckt werden können. Die Erfindung ermöglicht eine adaptivere Berücksichtigung der aktuellen Ortungssituation und gewährleistet, dass Rauschanteile präziser und im größeren Maße ausgeblendet werden können und Signalanteile in deutlich geringerem Maße unbeabsichtigt unterdrückt werden. Die selektive und adaptive Vorbehandlung der Signale verringert den Verarbeitungsaufwand beträchtlich, ohne jedoch die Qualität der Signalverarbeitung wesentlich zu beeinträchtigen. Insbesondere ermöglicht die Erfindung im Gegensatz zum Stand der Technik, dass sich ändernde Umgebungsverhältnisse in die Vorverarbeitung und somit in der generellen Unterscheidung von Rausch- und Nutzsignalanteilen berücksichtigt werden können.

Der Erfindung liegt das Konzept zu Grunde, aus einem ersten Empfangs-Wellenpuls abzuleiten, inwiefern ein weiterer Empfangs-Wellenpuls Abschnitte mit nur Rauschkomponenten enthält. Hierbei wird ein erster Empfangs-Wellenpuls verwendet, um aus diesen zu schließen, an welchen Abschnitten ein folgender Empfangs-Wellenpuls Rauschen enthält. Hierbei ist die Verwendung des ersten Empfangs-Wellenpulses vielfältig, zum einen kann aus dem Signalverlauf des ersten Empfangs-Wellenpulses selbst erfasst werden, ab welchem Schwellwert von einem Nutzsignal auszugehen ist, und welche Rauschleistung für den weiteren Empfangs-Wellenpuls während einer nutzsignalfreien Periode anzusetzen ist. Anhand des ersten Empfangs-Wellenpulses wird damit geschätzt, welcher Schwellwert für den weiteren Empfangs-Wellenpuls am besten geeignet ist. Hierbei wird die Tatsache berücksichtigt, dass aufeinander folgende Empfangs-Wellenpulse ähnliche Signalcharakteristika aufweisen und eine vergleichbare Umgebung wiedergeben. Zum anderen wird nicht der Empfangs-Wellenpuls selbst sondern die von diesen getragenen Informationen verwendet, d.h. der Verlauf, welcher eine Laufzeit des ersten Empfangs-Wellenpulses angibt. Während davon auszugehen ist, dass ein weiterer Empfangs-Wellenpuls eine ähnliche Objektsituation betrifft, kann die Länge des Anfangsabschnitts, des Empfangs-Wellenpulses, in dem kein Echo registriert wird, als Abschätzung für die Anfangszeit genommen werden, während der weitere Empfangs-Wellenpuls ignoriert bzw. unterdrückt werden kann, da dort keine Reflektion zu erwarten ist. Prinzipiell wird somit eine Signaleigenschaft aus dem ersten Empfangs-Wellenpuls verwendet, um diese Signaleigenschaft bei der Verarbeitung des weiteren Empfangs-Wellenpulses zu verwenden. Diese Signaleigenschaften sind insbesondere der Signalpegel während einer Echoberührungsphase des ersten Empfangs-Wellenpulses und somit die Rauschleistung, die Dauer eines Anfangsabschnitts, während dem in dem ersten Empfangs-Wellenpuls nur Rauschen und kein Signal erfasst wurde oder andere Signaleigenschaften.

Eine besondere Ausführungsform der Erfindung sieht vor, dass der gesamte Verlauf des ersten Empfangs-Wellenpulses als Signaleigenschaft verwendet wird und der weitere Empfangs-Wellenpuls dadurch weiterverarbeitet wird, dass dieser in Form seines Verlaufs mit dem Verlauf des ersten Empfangs-Wellenpulses verglichen wird und der subtrahierte Verlauf den Unterschied zwischen dem ersten und dem weiteren Empfangs-Wellenpuls wiedergibt. Anhand dieser Differenz kann die Objekterfassung selbst differentiell fortgesetzt werden, indem beispielsweise ein Delta der Laufzeiten zwischen dem ersten und dem zweiten Empfangs-Wellenpuls zu einem Delta führt, das einem Abstand eines Objekts hinzugefügt oder von diesem Abstand subtrahiert wird. Dadurch kann die erfasste Objektsituation rekursiv bzw. fortgesetzt um ein Delta nachgeführt werden, im Gegensatz zu einer wiederholten Neuerfassung der Umgebung. Die differentielle Betrachtung, die eine Aktualisierung und nicht einer Wiederholung der Umgebungserfassung gleicht, kann mit einer wiederholten Neuerfassung der Umgebung kombiniert werden.

Grundsätzlich hängt somit erfindungsgemäß die Objekterfassung anhand eines weiteren Empfangs-Wellenpulses von einem vorhergehenden, ersten Empfangs-Wellenpuls ab, sei es durch die Nachführung der Objekterfassung anhand des Vergleichs der Empfangs-Wellenpulsverläufe, oder durch Ableitung eines Schwellenwerts oder einer Anfangszeitdauer aus dem ersten Empfangs-Wellenpuls, um den weiteren Empfangs-Wellenpuls zu verarbeiten, insbesondere durch Unterdrücken von Signalabschnitten, für die für den ersten Empfangs-Wellenpuls lediglich eine Rauschkomponente ermittelt wurde. Der erste und der weitere Empfangs-Wellenpuls sind vorzugsweise nicht mehr als eine vorgegebene Zeitdauer zueinander verzögert, um voraus Signaleigenschaften des Empfangs-Wellenpuls auf die Signaleigenschaften des weiteren Empfangs-Wellenpulses schließen zu können, oder um eine aussagekräftige Differenzbildung vorsehen zu können.

Gemäß einer bevorzugten Ausführungsform der Erfindung ist der weitere Empfangs-Wellenpuls der unmittelbare Nachfolger des ersten Empfangs-Wellenpulses. Als erster Empfangs-Wellenpuls ist nicht der erste einer Serie von Wellenpulsen zu verstehen, sondern lediglich derjenige Wellenpuls, der vor dem weiteren Wellenpuls empfangen wurde. Ferner kann der weitere Empfangs-Wellenpuls auch Signaleigenschaften von mehreren, den weiteren Empfangs-Wellenpuls vorangegangenen Empfangs-Wellenpulse abgeschätzt werden. Bei mehreren ersten Empfangs-Wellenpulsen kann beispielsweise ein Mittelwert gebildet werden, beispielsweise ein Fenstermittelwert, oder es kann eine Integration über die Signaleigenschaften stattfinden, falls eine integrierbare Signaleigenschaft zur Abschätzung der Signaleigenschaft des weiteren Empfangs-Wellenpulses verwendet wird.

Erfindungsgemäß wird daher ein Verfahren zum Erfassen eines Objekts innerhalb einer Umgebung eines Fahrzeugs vorgesehen. Insbesondere wird ein Verfahren zum Erfassen von mehreren Objekten innerhalb der Umgebung vorgesehen, wobei die Objekte feststehende oder sich bewegende Objekte sein können, die relativ zum Fahrzeug angeordnet sind. Das Verfahren betrifft die aktive Erfassung von Objekten, wobei wiederholt Sende-Wellenpulse in die Umgebung abgegeben werden. Empfangs-Wellenpulse werden (wiederholt) empfangen, wobei die Empfangs-Wellenpulse den Sende-Wellenpulsen oder dem Sende-Wellenpuls entsprechen, die bzw. der von dem Objekt (oder den Objekten) zurückgestrahlt wird. Die Empfangs-Wellenpulse entsprechen somit den Sende-Wellenpulsen bis auf die Verzerrung bzw. Verzögerung, die durch die Umgebung und die Objekte vorgesehen wird. Anhand des Vergleichs von Empfangs-Wellenpulsen mit Sende-Wellenpulsen wird somit auf die Umgebung geschlossen.

Das Objekt wird anhand einer Signaldarstellung der Empfangs-Wellenpulse erfasst. Hierbei kann ein Objekt auch anhand eines einzelnen Empfangs-Wellenpulses erfasst werden. Ferner wird erfindungsgemäß zumindest eine Signaleigenschaft des ersten Empfangs-Wellenpulses ermittelt. Diese Signaleigenschaft kann der Verlauf selbst sein, eine Laufzeit bzw. ein damit verknüpfter Abstand zu einem Objekt, der eine Signaleigenschaft des Wellenpulses ist, oder die Signaleigenschaft kann durch eine Rauschleistung vorgesehen werden. Gemäß einer Ausführungsform der Erfindung wird der Verlauf als die Signaleigenschaft angesehen, wobei der Verlauf des ersten Empfangs-Wellenpulses mit dem Verlauf eines weiteren Empfangs-Wellenpulses verglichen wird. Somit werden gleichartige Signaleigenschaften des ersten und des weiteren Empfangs-Wellenpulses miteinander verglichen. Wenn insbesondere die Signaleigenschaft der Verlauf des Wellenpulses selbst ist, wird anhand des Vergleichs die Ortsinformation des Objekts nachgeführt. Das Nachführen wird vorgesehen durch die Ortsinformation des ersten Empfangs-Wellenpulses und durch ein Delta, das sich aus dem Vergleich zwischen dem Verlauf des ersten Empfangs-Wellenpulses und des weiteren Empfangs-Wellenpulses ergibt. Das sich auf die Ortsinformation beziehende Delta wird mit der Ortsinformation kombiniert, die sich aus dem ersten Empfangs-Wellenpulses ergibt. Somit wird die Ortsinformation lediglich anhand des Vergleichsergebnisses aktualisiert und zunächst nicht unmittelbar nur in einen neuen Erfassungsprozess ermittelt.

Eine weitere Ausführungsform sieht vor, dass als Signaleigenschaft eine Rauschleistung oder eine Laufzeit des ersten Empfangs-Wellenpulses ermittelt wird. Die Rauschleistung entspricht beispielsweise der Leistung, die sich innerhalb einer Leerlaufzeitspanne oder eines Echoberuhigungszeitraums in dem ersten Empfangs-Wellenpuls ergibt. Die Rauschleistung wird somit anhand eines Signalabschnitts des ersten Empfangs-Wellenpulses erfasst, während dem im Wesentlichen keine Nutzsignalkomponente vorliegt. Die Rauschleistung kann ermittelt werden anhand des gesamten Abschnitts oder anhand einer Maximalamplitude innerhalb des Abschnitts, während dem im Wesentlichen keine Nutzsignalkomponente vorliegt. Anhand dieser Signaleigenschaft des ersten Empfangs-Wellenpulses lässt sich ein Schwellwert oder eine Zeitspanne für den weiteren Empfangs-Wellenpuls vorsehen, wobei sich die Signaleigenschaften entsprechen. Diese Entsprechung umfasst insbesondere, das für den weiteren Empfangs-Wellenpuls nicht exakt die gleiche Signaleigenschaft angenommen wird (d.h. Rauschleistung oder Abschnittslänge ohne Nutzsignalkomponente), sondern die Signaleigenschaft wird anhand des ersten Empfangs-Wellenpulses ermittelt, eine Sicherheitsmarge wird addiert, und aus der Summe ergibt sich der Schwellwert bzw. die Laufzeit oder Zeitspanne für die Verarbeitung des weiteren Empfangs-Wellenpulses.

Die Funktion zwischen Laufzeit des weiteren Empfangs-Wellenpulses abhängig von der Signaleigenschaft des ersten Empfangs-Wellenpulses kann somit im Wesentlichen eine Entsprechung sein (inklusive einer Sicherheitsmarge). Der Schwellwert nimmt beispielsweise mit zunehmender Laufzeit des ersten Wellenpulses ab, beispielsweise proportional zu T^{-x} mit x = 1..2, wobei T der Laufzeit entspricht.

Die Signaleigenschaften sind beispielsweise gleich, wenn aus dem ersten Empfangs-Wellenpuls eine Rauschleistung oder Nutzsignalleistung ermittelt wird, aus der der Schwellwert für den weiteren Empfangs-Wellenpuls vorgesehen wird. In gleicher Weise sind die Signaleigenschaften gleich, wenn aus dem ersten Empfangs-Wellenpuls eine Laufzeit oder eine Zeitspanne ermittelt wird, anhand der eine Zeitspanne oder Laufzeit für den weiteren Empfangs-Wellenpuls vorgesehen wird, während der das Signal unterdrückt wird. Jedoch kann die Funktion auch eine Abbildung sein, bei der unterschiedliche Signaleigenschaften miteinander verknüpft werden. Hierbei wird beispielsweise anhand der Laufzeit des ersten Empfangs-Wellenpulses bzw. anhand der Zeitspanne des ersten Empfangs-Wellenpulses während dem im Wesentlichen keine Nutzsignalkomponente auftrat, auf eine Rauschleistung in Form eines Schwellwerts geschlossen. Die Funktion bzw. die Abbildung gibt in diesem Fall einen Zusammenhang wieder, gemäß dem mit zunehmenden Abstand Nutzleistung abnimmt und somit ein geringerer Schwellwert bei hohen Abständen verwendet werden muss, als bei geringen Abständen.

Als Signaleigenschaft des Wellenpulses wird dessen Verlauf angesehen, wobei der Verlauf des ersten Empfangs-Wellenpulses mit dem Verlauf des weiteren Empfangs-Wellenpulses verglichen wird, um den Unterschied zwischen beiden zu erfassen und zur Nachführung zu verwenden. Anhand dieses Vergleichs wird die Ortsinformation des Objekts nachgeführt. Als Alternative wird ein voran gegangener, erster Empfangs-Wellenpuls berücksichtigt, in dem eine Rauschleistung oder eine Laufzeit als die Signaleigenschaft des Wellenpulses ermittelt wird. Anhand der Rauschleistung oder der Laufzeit (oder einer wie oben aufgeführten Kombination hiervon) des ersten Empfangs-Wellenpulses werden Schwellwerte als Funktion dieser Rauschleistung oder der Laufzeit als Signaleigenschaft abgeleitet, wobei der Verlauf des weiteren Empfangs-Wellenpulses gemäß dieser Schwellwerte diskretisiert wird. Als Diskretisieren wird insbesondere das Unterdrücken oder Ignorieren von Wellenpulsabschnitten angesehen, die unterhalb eines Schwellwerts oder zwischen zwei Schwellwerten liegen. Ferner kann der Schwellwert als Funktion einer Nutzsignalleistung vorgegeben werden, wobei der Schwellwert mit einer negativen Sicherheitsmarge beaufschlagt wird, um geringer ausfallende Nutzsignalkomponenten nicht unbeabsichtigt zu unterdrücken.

Gemäß einer Ausführungsform dieser Vorgehensweise wird als Signaleigenschaft der Verlauf angesehen (d.h. der Verlauf des ersten Wellenpulses wird in dem Verlauf des weiteren Wellenpulses verglichen) und einer Unterschied im zeitlichen Verlauf zwischen den beiden Wellenpulsen wird erfasst. Ferner kann auch ein Signalstärkeunterschied zwischen dem ersten und den weiteren Empfangs-Wellenpuls erfasst werden demgemäß die Schwellwerte nachgeführt werden. Das Vergleichen des Verlaufs und das Erfassen eines Signalstärkeunterschieds kann auch miteinander kombiniert werden. Als unterschiedlichern zeitlichen Verlauf zwischen den beiden Wellenpulsen wird insbesondere ein Unterschied in den Laufzeiten des ersten und des weiteren Empfangs-Wellenpulses betrachtet, wobei die Laufzeiten sich in der Länge der Zeitspanne widerspiegeln, die von einem Zeitreferenzpunkt (beispielsweise ein virtueller Sendezeitpunkt) bis zum Auftreten eines (ersten) Reflektionsmerkmals verstreicht. Der Signalstärkeunterschied kann wie oben beschrieben als Unterschied maximaler Signalstärke bzw. einer maximalen Amplitude der Empfangs-Wellenpulse während eines E-choberuhigungsintervalls vorgesehen werden. Hierdurch kann beispielsweise für den weiteren Empfangs-Wellenpuls die Rauschleistung berücksichtigt werden bzw. dadurch können die Schwellwerte ausgehend von einer Rauschleistung eines vorangehenden Wellenpulses nachgeführt, d.h. aktualisiert werden. Für den weiteren Wellenpuls wird somit zunächst die Rauschleistung (und der damit verbundene Schwellwert des vorangegangenen Wellenpulses) angenommen werden.

Eine weitere Ausführungsform sieht eine Vereinfachung der Informationsdarstellung vor, indem die Werte der Wellenpulse diskretisiert werden. Somit wird beim Vergleich des Verlaufs eine wertdiskrete Wiedergabe des Trägersignals oder des Basisbandsignals verwendet, das den jeweiligen Empfangs-Wellenpuls wiedergibt. Die wertdiskrete Wiedergabe wird vorgesehen durch eine Anzahl von Amplituden auf diesen Stufen bzw. einer Anzahl von Schwellwerten, die vorzugsweise zwei oder drei beträgt, jedoch auch mehr als drei betragen kann. Besonders bevorzugt ist eine Darstellung als ternäres Signal. Die wertdiskrete Wiedergabe des Trägersignals bzw. des Basisbandsignals, das den Wellenpuls wiedergibt, kann dem Amplitudenverlauf entsprechen oder kann der ersten zeitlichen Ableitung des Amplitudenverlaufs entsprechen. Dem Vergleich der Signaleigenschaft des ersten und des weiteren Empfangs-Wellenpulses liegt somit entweder die zeitliche Darstellung des Verlaufs selbst oder dessen erste zeitliche Ableitung zu Grunde. Die Amplitudenauflösungsstufen können, soweit sie Amplituden betreffen, symmetrisch sein und aus zwei zueinander zum Nullpunkt symmetrische Schwellwerte oder Auflösungsstufen bestehen, oder können, soweit sie eine Signalleistung betreffen, aus einer Amplitudenauflösungsstufe oder aus zwei oder mehr Amplitudenauflösungsstufen bestehen. Sofern die Amplitudenauflösungsstufen einen unterschiedlichen Betrag aufweisen können diese linear entlang der Wertachse verteilt sein, wobei zwischen zwei Amplitudenauflösungsstufen der gleiche Abstand herrscht. Alternativ können die Amplitudenauflösungsstufen, soweit sie vom Betrag her verschieden sind, logarithmisch verteilt sein, indem eine nachfolgende Amplitudenauflösungsstufe mit einem festen Proportionalitätsfaktor von einer vorhergehenden Auflösungsstufe abhängt.

Eine besonders bevorzugte Ausführungsform sieht vor, dass der Verlauf als die erste zeitliche Ableitung des Amplitudenverlaufs dargestellt wird, wobei die wertdiskrete Wiedergabe ein ternäres Signal ist, das angibt, ob die Veränderung des Amplitudenverlaufs vom Betrag her unter einem Schwellwert liegt (ternäres Zeichen 0), der Anstieg des Amplitudenverlaufs über einen Schwellwert liegt (ternäres Zeichen +1) oder der Anstieg negativ ist und unter einem Schwellwert liegt (ternäres Zeichen -1). Die Wertdiskretisierung kann auch nur Verlaufsabschnitte betreffen, deren Amplitude oder Leistung unter einem Schwellwert liegt, wobei diese Abschnitte zurückgesetzt werden oder bei der weiteren Verarbeitung unterdrückt werden, wobei Abschnitte mit Amplituden oder Leistungen über dem Schwellwerte weiterhin im Wesentlichen wertkontinuierlich dargestellt sind. Eine in diesem Sinne wertkontinuierliche Darstellung wird beispielsweise an einem an sich wertdiskreten Signal wiedergegeben, das jedoch eine hohe Auflösung aufweist, beispielsweise eine Auflösung von 8 Bit oder mehr.

Weitere Ausführungsformen der Erfindung sind auf die Rauschleistung oder die Laufzeit fokussiert, die als Signaleigenschaft ermittelt werden. Eine der Schwellwerte entspricht beispielsweise der Rauschleistung. Alternativ wird zumindest einer der Schwellwerte vorgesehen, in dem eine Laufzeit auf zumindest einen dieser Schwellwerte abgebildet wird. Diese Abbildung ist vorzugsweise eine monoton oder streng monoton fallende Funktion, die die Abschätzung widerspiegelt, dass bei langen Laufzeiten auf Grund des hohen Abstands die Nutzsignalleistung verringert ist und somit ein niedrigerer Schwellwert erforderlich ist, um Signalabschnitte, die auch Nutzsignalkomponenten enthalten, nicht unbeabsichtigt zu unterdrücken. Wenn eine Rauschleistung, eine Nutzsignalleistung oder eine Laufzeit des ersten Empfangs-Wellenpulses für die Erzeugung eines Schwellenwerts für einen weiteren Empfangs-Wellenpuls verwendet wird, dann wird vorzugsweise eine vorbestimmte, feste Sicherheitsmarge zu dem Schwellwert hinzuaddiert, beispielsweise 5 % oder ein vorbestimmter Wert, um Ausreißer in den weiteren Empfangs-Wellenpuls, die in der Amplitude in dem ersten Empfangs-Wellenpuls nicht vorgesehen sind, ebenso unterdrücken zu können. Die Sicherheitsmarge kann auch negativ sein, um schwache Nutzsignalkomponenten im weiteren Empfangs-Wellenpuls nicht zu unterdrücken, die von ihrer Amplitude oder von ihrer Signalstärke her einer zu unterdrückenden Rauschkomponente des ersten Wellen-Empfangspulses entsprechen würden.

Weiterhin ist vorgesehen, dass der zumindest eine Schwellwert verwendet wird, um Abschnitte auszusondern, die nur Rauschkomponenten enthalten, wobei das Aussondern vorgesehen wird, indem der weitere Empfangs-Wellenpuls in Abschnitten, in denen der Schwellwert nicht erreicht wird, entweder auf null gesetzt wird oder wie bei der Erfassung der Objekte ignoriert werden.

Eine spezifische Ausbildung der Erfindung sieht vor, dass der Empfangs-Wellenpuls mit einem Analog/Digital-Wandler erfasst wird. Üblicherweise haben Analog/DigitalWandler (im folgenden ADC) ein festes Referenzsignal, anhand dem die Größe des Eigensignals abschätzt und digitalisiert wird. Erfindungsgemäß wird jedoch vorgesehen, dass dieses Referenzsignal nicht konstant ist, sondern durch eine Darstellung des ersten Empfangs-Wellenpulses vorgesehen wird. Dieses Referenzsignal wird in einer Darstellung vorgesehen, in der auch der weitere Empfangs-Wellenpuls an den Eingang des ADCs angelegt wird, d.h. beispielsweise als ternäre, wertdiskrete Darstellung des Amplitudenverlaufs oder dessen zeitliche Ableitung. Vorzugsweise wird jedoch eine im wesentlichen wertdiskrete (d.h. hoch aufgelöste) Darstellung verwendet, oder auch ein analoges Signal, so dass vor der Umwandlung des ADCs keine wesentliche Signalverarbeitung erforderlich ist. Dadurch wird bereits bei der Umwandlung des weiteren Empfangs-Wellensignals der erste Empfangs-Wellenpuls berücksichtigt. Dadurch, dass das Referenzsignal vom ersten Empfangs-Wellenpuls vorgesehen wird und dass im Vergleich hierzu abzuschätzende Signal des weiteren Empfangs-Wellenpulses am Eingang des ADCs vorgesehen wird entspricht das vom ADC ausgegebene Signal einen Differenz-Signalverlauf, der die Unterschiede zwischen dem Verlauf des weiteren Empfangs-Wellenpulses abzüglich des ersten Empfangs-Wellenpulses entspricht. Diese differentielle Betrachtungsweise ermöglicht die Nachführung der Objekterkennung anhand des Differenzsignals, wodurch der weitere Empfangs-Wellenpuls nur als differentielle Aktualisierung verwendet wird und nicht verwendet wird, um erneut eine Objekterfassung vorzusehen. Dadurch wird die Signalverarbeitung deutlich vereinfacht.

Die Signaldarstellung der Empfangs-Wellenpulse kann eine tiefpassgefilterte Darstellung sein, d.h. eine tiefpassgefilterte Darstellung des Trägersignals oder eines Basisbandsignals.

Gemäß einer speziellen Ausführungsform der Erfindung wird die Laufzeit des ersten Empfangs-Wellenpulses zur Erzeugung des Schwellwerts des weiteren Empfangs-Wellenpulses vorgesehen. Diese Laufzeit hat eine unmittelbare Korrespondenz zu einem Objektabstand über die Ausbreitungsgeschwindigkeit der Wellenpulse. Wenn die Laufzeit (und somit auch ein Abstandswert) des ersten Empfangs-Wellenpulses zur Schwellwertbestimmung verwendet wird, so kann die Laufzeit bzw. der Abstand wertdiskret vorgesehen werden, wobei die Auflösung der wertdiskreten Darstellung an die Ausbreitungswellenlänge angelehnt ist. Somit werden für die Auflösung Auflösungsstufen verwendet, deren Höhe bzw. deren Abstand voneinander einer Wellenlänge oder einer halben Wellenlänge des Wellenpulses in der Umgebung entspricht. Ferner kann ein Vielfaches der halben oder der ganzen Wellenlänge als Höhe für die Auflösungsstufen verwendet werden.

Das Verfahren ist grundsätzlich für Wellenpulse in der Umgebung geeignet, die als elektromagnetische Wellenpulse oder als Schallwellen vorgesehen sind. Bevorzugt wird jedoch die Erfindung für Ultraschall angewandt, so dass alle Wellenpulse in der Umgebung als Ultraschallwellenpulse dargestellt sind.

Eine erfindungsgemäße Vorrichtung zum Erfassen von Objekten ist vorgesehen, um das erfindungsgemäße Verfahren auszuführen. Eine derartige Vorrichtung umfasst eine Signalverarbeitungsvorrichtung mit einem Speicher sowie einen Eingang. Der Eingang empfängt die Signaldarstellung (beispielsweise die analogen Wandlersignale) des ersten und weiteren Empfangs-Wellenpulses und leitet diese an die Signalverarbeitungsvorrichtung weiter. Da die Erfindung grundsätzlich vorsieht, dass der weitere Empfangs-Wellenpuls basierend auf zumindest einem Merkmal des ersten Empfangs-Wellenpulses verarbeitet wird, ist die Signalverarbeitungsvorrichtung eingerichtet, die Signaldarstellung zu speichern, insbesondere in dem Speicher. Je nach Ausprägung umfasst die Signalverarbeitungsvorrichtung ferner einen Verlaufsvergleicher, der im ersten Empfangs-Wellenpuls (im Speicher hinterlegt) mit dem Verlauf des weiteren Empfangs-Wellenpulses (über den Eingang angelegt und gegebenenfalls in einem Pufferspeicher abgelegt) vergleicht. Die Signalverarbeitungsvorrichtung ist ferner vorgesehen, um die Ortsinformation des Objekts zunächst zu schätzen anhand des ersten Empfangs-Wellenpulses und diese Ortsinformation gemäß dem Ergebnis des Verlaufsvergleiches nachzuführen, um somit anhand des weiteren Empfangs-Wellenpulses die Ortsinformation des zumindest einen Objekts nachführen zu können. Eine weitere Ausprägung der Vorrichtung sieht vor, dass die Signalverarbeitungsvorrichtung ferner einen Schwellwertgenerator und einen Schwellwertvergleicher umfasst, wobei der Schwellwertgenerator einen Schwellwert anhand einer Signaleigenschaft des ersten Empfangs-Wellenpulses vorsieht. Gegebenenfalls ist die Signalverarbeitungsvorrichtung eingerichtet, eine Sicherheitsmarge zu dem Ergebnis zu addieren, um die Summe des Schwellwerts bzw. der Rauschleistung und der Sicherheitsmarge an den Schwellwertvergleicher abzugeben, der wiederum eingerichtet ist, den weiteren Empfangs-Wellenpuls hiermit zu vergleichen. Dadurch ist die Signalverarbeitungsvorrichtung in der Lage, Werte des weiteren Empfangs-Wellenpulses unterhalb des Schwellwerts zu unterdrücken (und somit von der weiteren Verarbeitung der Signalinformation auszuschließen) oder die Werte auf null zu setzen, wodurch die weitere Verarbeitung erleichtert wird.

Eine Ausführungsform der erfindungsgemäßen Vorrichtung sieht vor, dass die Signalverarbeitungsvorrichtung eingerichtet ist, die Laufzeit des nächstliegenden Objekts anhand des ersten Empfangs-Wellenpulses zu erfassen (beispielsweise mittels eines Timers oder Zählers, in Kombination mit einer Vorrichtung, die die erste Reflektion im ersten Empfangs-Wellenpuls erfassen kann). Die Signalverarbeitungsvorrichtung ist hierbei eingerichtet, Werte des weiteren Empfangs-Wellenpulses zu unterdrücken, die einer kürzeren Laufzeit als die Laufzeit des nächstliegenden Objekts entsprechen. Somit ist die Signalverarbeitungsvorrichtung eingerichtet, Abschnitte des Empfangs-Wellenpulses zu ignorieren, auf null zu setzen oder zu unterdrücken, die in einem Anfangsabschnitt liegen, der einem Abstand entspricht, für dem im ersten Empfangs-Wellenpuls keine Reflektion erfasst wurde. Für den weiteren Empfangs-Wellenpuls wird somit von der Signalverarbeitungsvorrichtung ein Signalabschnitt unterdrückt, von dem anhand des ersten Empfangs-Wellenpulses davon auszugehen ist, dass dort nur Rauschkomponenten vorliegen. Insbesondere kann die Länge des Anfangsabschnitts, für die der weitere Empfangs-Wellenpuls unterdrückt wird, der Laufzeit abzüglich einer Laufzeit-Sicherheitsmarge entsprechen, so dass bei einer Relativbewegung des Objekts auf das Fahrzeug zu dieses für den weiteren Empfangs-Wellenpuls noch in einem Abschnitt liegt, der nicht zum Anfangsabschnitt gehört und unterdrückt wird.

Eine weitere Ausführung sieht vor, dass die Signalverarbeitungsvorrichtung insbesondere einen kurzen, ersten Anfangsabschnitt des weiteren Empfangs-Wellenpulses unterdrückt, der in einer vorgegebenen Kurzlaufzeit liegt, welche wiederum einem Abstand von beispielsweise 5 oder 10 cm entspricht, innerhalb dem noch Reflektionen durch Fahrzeugkomponenten selbst auftreten können. Die Signalverarbeitungsvorrichtung kann eingerichtet sein, beide Abschnitte zu unterdrücken, d.h. zum einen zumindest den kurzen Anfangsabschnitt zur Unterdrückung von Reflektionen durch das Fahrzeug selbst und zum anderen den Laufzeitabschnitt des ersten Empfangs-Wellenpulses, in dem keine Reflektion auftrat. Um kurzfristig auftretende Objekte auch erfassen zu können, die nicht im ersten jedoch vom weiteren Empfangs-Wellenpuls grundsätzlich erfasst sind, kann diese laufzeitbezogene Unterdrückung auch nur für einen Teil der Empfangs-Wellenpulse vorgesehen werden, so dass beispielsweise jeder zehnte Empfangs-Wellenpuls keinen ersten, unterdrückten Anfangsabschnitt aufweist, der sich aus der Laufzeit des ersten Empfangs-Wellenpulses ergibt, um so schnell auftretende, nächstliegende Objekte erfassen zu können und nicht grundsätzlich anhand der Laufzeit eines vorhergehenden, ersten Empfangs-Wellenpulses zu unterdrücken.

Anstatt den Schwellwert anhand der Rauschleistung des ersten Empfangs-Wellenpulses zu ermitteln können die Schwellwerte, die für den weiteren Empfangs-Wellenpuls gelten, auch aus der Signalstärke eines Objektechos des ersten Empfangs-Wellenpulses abgeleitet werden, wobei der Schwellwert mit zunehmender Signalstärke (beispielsweise gemessen anhand einer maximalen Amplitude einer Einhüllenden) ansteigt, jedoch unter der Signalstärke liegt, folgende Nutzsignale mit der gleichen (oder einer ähnlichen) Stärke nicht zu unterdrücken.

Grundsätzlich müssen der erste Empfangs-Wellenpuls und der weitere Empfangs-Wellenpuls nicht von demselben Sensor empfangen werden, vielmehr können der erste und der weitere Empfangs-Wellenpuls von verschiedenen Wandlern bzw. Sensoren empfangen werden.

Eine Signaleigenschaft eines ersten Empfangs-Wellenpulses kann auch in den empfangenen Echos bzw. deren Auftrittszeiten bestehen, wobei aus dem ersten Empfangs-Wellenpuls zunächst eine örtliche Objektverteilung vorgesehen werden kann, aus der wiederum mittels eines Prediktors der oder die Zeitabschnitte für den weiteren Empfangs-Wellenpuls abgeleitet werden, in denen eine Reflektion zu erwarten ist, und die somit nicht zu unterdrücken sind, im Gegensatz zu den verbleibenden Abschnitten des weiteren Empfangs-Wellenpulses. Dadurch wird aus einem erfassten Objektbild eine "Schablone" für die weitere Signalerfassung, d.h. für die Erfassung mittels des weiteren Empfangs-Wellenpulses erzeugt, die die Signalverarbeitung auf die geschätzten relevanten Bereiche reduziert und Bereiche, die zur Objekterfassung anhand des ersten Wellenpulses als nicht relevant beachtet wurden, für den weiteren Empfangs-Wellenpuls ausblendet. Gemäß einer Betrachtungsweise wird somit aus dem ersten Empfangs-Wellenpuls ein "matched filter" erzeugt, gemäß dem der weitere Empfangs-Wellenpuls gefiltert wird. Dieses "matched filter" gibt die Stellen wieder, die anhand des ersten Empfangs-Wellenpulses als relevant erachtet wurden, sowie die Abschnitte des Pulses, die anhand des ersten Empfangs-Wellenpulses als nicht relevant erachtet wurden. Die Informationen des ersten Empfangs-Wellenpulses können auch kumuliert werden in einem "matched filter", das mit jedem weiteren Empfangs-Wellenpuls nachgeführt bzw. aktualisiert wird. Das "matched filter" sieht vor, dass im Wesentlichen die Unterschiede zwischen dem ersten und dem weiteren Empfangs-Wellenpuls erfasst werden und weiterverarbeitet werden, insbesondere durch Rückkopplung an einen Eingang einer Regelschleife, der auch den weiteren Empfangs-Wellenpuls erhält. An diesem Eingang werden die differentielle Betrachtung (d.h. der Unterschied zwischen dem ersten und den weiteren Empfangs-Wellenpuls) und der weiteren Empfangs-Wellenpuls kombiniert, um beispielsweise die Darstellung der Objektanordnung (beispielsweise repräsentiert durch einen typischen, aktuellen Reflexionspulsverlauf) nachzuführen bzw. zu aktualisieren gemäß einer rückgeführten Regelungsschleife.

### Kurzbeschreibung der Zeichnung

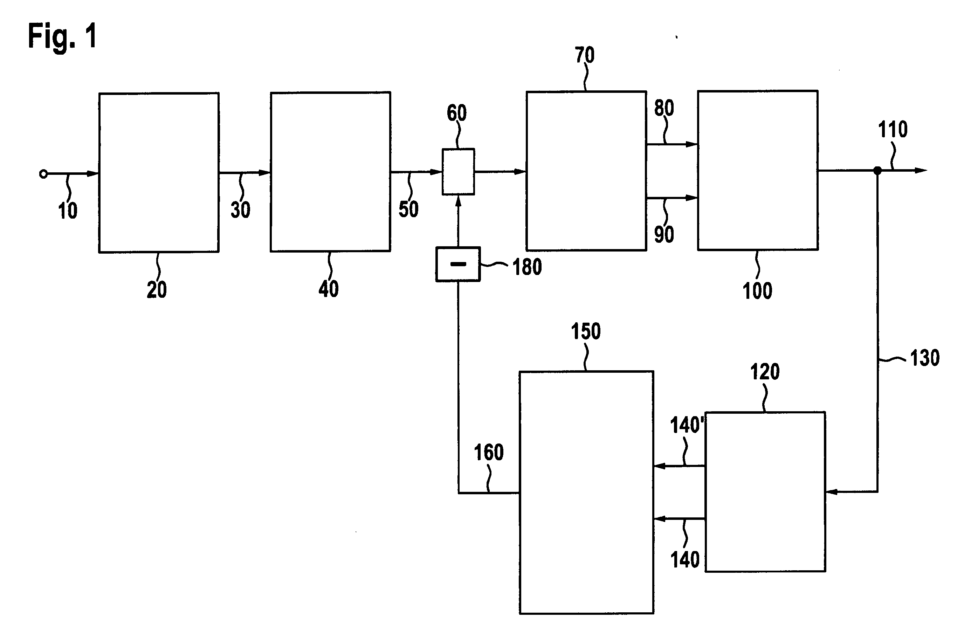

Figur 1 zeigt ein Schaubild zur näheren Erläuterung des erfindungsgemäßen Verfahren und erfindungsgemäßen Vorrichtung.

### Detaillierte Beschreibung der Zeichnung

In dem Schaubild der Figur 1 ist zunächst vorgesehen, dass Empfangs-Wellenpulse als Eingangssignal in Form eines Trägersignals 10 an einen Basisbandumsetzer 20 angelegt werden. Dieser bildet aus dem Trägerfrequenzsignal ein Basisbandsignal 30 das gegebenenfalls bereits in digitaler Form abgetastet vorliegt. Das Basisbandsignal wird an einen Signaleigenschaftsermittler 40 weitergegeben, der im Fall von Figur 1 die Echostärke 50 bestimmt und ausgibt. Diese wird an eine im weiteren näher definierte Kombinationsvorrichtung 60 abgegeben, die das Echostärkensignal 50 (kombiniert mit einem weiteren Signal) an einen Empfangsfilter 70 weitergibt. Dieser Empfangsfilter ermittelt aus dem Echostärkensignal 50, welches mit einem weiteren Signal kombiniert wurde, nähere Signaleigenschaften, die objektbezogen sind, d.h. ein Echolaufzeitsignal 80 und ein zugehöriges Echoamplitudensignal 90. Die Kombination des Echolaufzeitsignals mit dem Echoamplitudensignal gibt die Objekte anhand der zugehörigen Reflektionskomponenten wieder, wobei die Reflektionskomponenten durch ihren Auftrittszeitpunkt und ihre Amplitudenstärke definiert sind. Anhand dieser Kombination sind auch die erfassten Objekte selbst definiert, beispielsweise in Form eines Signalverlaufs. Eine Objekterfassungsvorrichtung 100 wertet die Signale 80, 90 aus und erstellt daraus eine Objektdarstellung 110. Diese kann beispielsweise in Polar- oder kartesischen Koordinaten dargestellt sein, wobei die Objektanordnungsdarstellung 110 zur weiteren Verarbeitung oder Darstellung auf der Windschutzscheibe oder einer Anzeige verwendet wird. Während die Echolaufzeiten 80 in die Darstellung 110 anhand von Objektabständen zum Fahrzeug widergespiegelt werden, wird das Echoamplitudensignal 90 in der Darstellung 110 wiedergegeben, in dem das reflektierende Objekt selbst näher spezifiziert wird, beispielsweise anhand der Größe oder einer anderen Objektkenngröße, die von der Amplitude des echten Amplitudensignals abhängt.

Die Objektanordnungsdarstellung 110 liegt vorzugsweise in digitaler Form vor und wird erfindungsgemäß in einer Rückkopplungsschleife zunächst einem Objektdarstellungsrückwandler 120 über eine Rückkopplungsschleife 130 rückgekoppelt, wobei der Objektdarstellungsrückwandler 120 anhand der Objektanordnungsdarstellung 110, die über die Rückkopplungsschleife 130 an den Rückwandler 120 angelegt werden, geschätzte Amplitudenechosignale 140 und Echolaufzeitsignale 140' erstellt. Der Objektdarstellungsrückwandler erzeugt somit ein geschätztes Echolaufzeitsignal 130 und ein geschätztes Amplitudenechosignal 140, ausgehend von der Objektanordnungsdarstellung 110. Die von dem Objektdarstellungsrückwandler 120 aus der Objektanordnungsdarstellung generierten geschätzten Echolaufzeiten 140' und Amplituden 140 werden einem Referenz-Wellenpulsgenerator 150 zugeführt, der aus den Signalen 140, 140' ein Referenz-Wellenpulssignal 160 erzeugt. Das Referenz-Wellenpulssignal gibt somit einen (geschätzten bzw. extrapolierten) Empfangs-Wellenpuls wieder, der entstehen würde, wenn in der Umgebung Objekte gemäß der Objektanordnungsdarstellung 110 vorliegen würden. Die Rückkopplungsschleife 130 geht somit von der bereit erstellten Objektanordnungsdarstellung 110 aus.

Alternativ kann diese auch von einem zwischengespeicherten gepufferten bzw. verzögerten Basisbandsignal ausgehen, das dem ersten Empfangs-Wellenpuls wiedergibt, und der über die Kombinationsvorrichtung 60 mit einer Darstellung des weiteren Empfangs-Wellenpulses verglichen bzw. kombiniert wird. Auf diese Weise kann die Rückkopplungsschleife abgekürzt werden.

Das in Figur 1 dargestellte Schaubild weist ferner einen symbolisch dargestellten Invertierer 180 auf, der das Referenz-Wellenpulssignal umkehrt. Das umgekehrte Signal wird der Kombinationsvorrichtung 60 zugeführt, um dieses mit dem Basisbandsignal eines weiteren Empfangs-Wellenpulses zu vereinigen, während das Referenz-Wellenpulssignal einen vorhergehenden, ersten Empfangs-Wellenpuls anhand der Objektanordnungsdarstellung wiedergibt. Die Invertierung 180 und die Kombination 60 ist in Figur 1 lediglich symbolhaft dargestellt, beide zusammen stehen für einen Vergleich zwischen einem ersten und einen weiteren Empfangs-Wellenpuls (bzw. deren Basissignale) wobei die Rückkopplungsschleife und insbesondere die Kombinationsvorrichtung 60 die Aktualisierung des ersten Wellenpulses mit dem Quotienten aus erstem und weiterem Wellenpuls darstellt.

In einer vereinfachten Ausführungsform gemäß der dargestellten Alternative findet die Erstellung der Objektordnungsdarstellung und deren Rückwandlung nicht innerhalb der Rückkopplungsschleife statt sondern außerhalb dieser. Innerhalb der Regungsschleife werden somit lediglich Signaldarstellungen bzw. Verlaufsdarstellungen der Wellenpulse verwendet, wobei eine Regelgröße in Form eines Wellenpulses gemäß der Rückkopplung anhand des Unterschieds zwischen den Wellenpulsen nachgeführt wird.

In dem Ablaufdiagramm der Figur 1 findet innerhalb der Rückkopplungsschleife eine Verzögerung statt, beispielsweise durch den Objektdarstellungsgenerator 100 oder durch den entsprechenden Rückwandler 120, so dass die Kombinationsvorrichtung 60, zusammen mit dem Invertierer 180 einen ersten Wellenpuls mit einem weiteren Wellenpuls kombiniert. Dadurch ergibt sich über die Zeit eine Nachführung des Systems.

## Patentansprüche

1. Verfahren zum Erfassen eines Objekts innerhalb einer Umgebung eines Fahrzeugs mit den Schritten:
Wiederholtes Senden von Sende-Wellenpulsen in die Umgebung;
Wiederholtes Empfangen von Empfangs-Wellenpulsen, die den von dem Objekt reflektierten Sende-Wellenpulsen entsprechen;
Erfassen des Objekts anhand einer Signaldarstellung der Empfangs-Wellenpulse,
und Ermitteln zumindest einer Signaleigenschaft eines ersten EmpfangsWellenpulses, wobei das Erfassen des Objekts umfasst:
Vergleichen des Verlaufs als die Signaleigenschaft des ersten Empfangs-Wellenpulses mit dem Verlauf eines weiteren Empfangs-Wellenpulses, der nach dem ersten Empfangs-Wellenpuls empfangen wurde, wobei anhand des Vergleichs Ortsinformationen des Objekts nachgeführt werden; oder
Ermitteln von einer Rauschleistung oder einer Laufzeit als die Signaleigenschaft des ersten Empfangs-Wellenpulses, Vorsehen von Schwellwerten als Funktion der Rauschleistung oder der Laufzeit als Signaleigenschaft; und Diskretisieren des Verlaufs eines weiteren Empfangs-Wellenpulses gemäß der Schwellwerte.

2. Verfahren nach Anspruch 1, wobei der Verlauf des ersten Empfangs-Wellenpulses mit dem Verlauf des weiteren Empfangs-Wellenpulses verglichen wird, und ein Unterschied im zeitlichen Verlauf zwischen dem ersten und dem weiteren Empfangs-Wellenpuls, eine Signalstärkeunterschied zwischen dem ersten und dem weiteren Empfangs-Wellenpuls, oder beides erfasst wird, wobei ein Unterschied im zeitlichen Verlauf einen Unterschied in den Laufzeiten des ersten und des weiteren Empfangs-Wellenpulses wiedergibt und der Signalstärkeunterschied einen Unterschied maximaler Signalstärke der Empfangs-Wellenpulse oder einen Unterschied der Signalstärke während einem Echoberuhigungsintervall der Empfangs-Wellenpulse wiedergibt.

3. Verfahren nach Anspruch 1 oder 2, wobei beim Vergleich des Verlaufs dieser eine wertdiskrete Wiedergabe des wertkontinuierlichen Amplitudenverlaufs eines Trägersignals oder eines Basisbandsignals ist, das den Empfangs-Wellenpuls wiedergibt, oder wobei der Verlauf eine wertdiskrete Wiedergabe der ersten zeitlichen Ableitung des Amplitudenverlaufs des Trägersignals oder des Basisbandsignals ist, und wobei in beiden Fällen die wertdiskrete Wiedergabe Amplitudenauflösungsstufen aufweist, die den Schwellwerten entsprechen, und die Amplitudenauflösungsstufen linear oder logarithmisch verteilt sind.

4. Verfahren nach Anspruch 3, wobei die Anzahl der Amplitudenauflösungsstufen oder der Schwellwerte zwei, drei oder mehr als drei beträgt wobei der Verlauf vorzugsweise als ternäres Signal vorgesehen wird.

5. Verfahren nach einem der vorangehenden Ansprüche, wobei die Rauschleistung oder die Laufzeit als Signaleigenschaft ermittelt wird und zumindest einer der Schwellwerte der Rauschleistung während einer Echoberuhigungszeit entspricht oder zumindest einer der Schwellwerte anhand einer vorgegebenen Abbildung von Laufzeiten auf Schwellwerte ausgehend von einer Laufzeit des ersten Empfangs-Wellenpulses vorgehen wird, vorzugsweise zuzüglich einer vorbestimmten Sicherheitsmarge, und wobei Werte der Signaldarstellung der Empfangs-Wellenpulse, insbesondere des weiteren Empfangs-Wellenpulses, die kleiner als der zumindest eine Schwellwert sind, entweder auf null gesetzt werden oder bei der Erfassung der Objekte ignoriert werden.

6. Verfahren nach einem der vorangehenden Ansprüche, wobei die Signaldarstellung des weiteren Empfangs-Wellenpulses von einem Analog/Digital-Wandler vorgesehen wird, dessen Referenzsignal vorgesehen wird durch eine Darstellung des ersten Empfangs-Wellenpulses, wodurch bereits bei der Umwandlung der ersten Empfangs-Wellenpulse berücksichtigt wird und der Analog/Digital-Wandler ein Signal ausgibt, das dem weiteren Empfangs-Wellenpuls, bezüglich des ersten Empfangs-Wellenpulses entspricht.

7. Verfahren nach einem der vorangehenden Ansprüche, wobei die Objekte anhand der Signaldarstellung erfasst werden, wobei die Signaldarstellung eine Tiefpass gefilterte Darstellung eines Trägersignals oder eines Basisbandsignals ist, das den Empfangs-Wellenpulse wiedergibt.

8. Verfahren nach einem der vorangehenden Ansprüche, wobei die Sende-Wellenpulse als Ultraschallwellen in die Umgebung abgegeben werden und die Empfangs-Wellenpulse Ultraschallwellen entsprechen, die von der Umgebung empfangen werden.

9. Vorrichtung zum Erfassen von Objekten zur Ausführung des Verfahrens nach einem der vorangehenden Ansprüche, umfassend: eine Signalverarbeitungsvorrichtung mit einem Speicher, wobei die Vorrichtung einen Eingang umfasst, der eingerichtet ist, Signaldarstellungen des ersten und des weiteren Empfangs-Wellenpulses aufzunehmen und an die Signalverarbeitungsvorrichtung zu leiten, wobei die Signalverarbeitungsvorrichtung eingerichtet ist, die Signaldarstellung zumindest des ersten Empfangs-Wellenpulses zu speichern, wobei die Signalverarbeitungsvorrichtung ferner einen Verlaufsvergleicher (60, 180) umfasst, der zum Vergleich des Verlaufs des ersten Empfangs-Wellenpulses mit dem Verlauf des weiteren Empfangs-Wellenpulses eingerichtet ist und die Signalverarbeitungsvorrichtung eingerichtet ist, die Ortsinformation des Objekts gemäß dem Ergebnis des Verlaufsvergleichers nachzuführen, oder wobei die Signalverarbeitungsvorrichtung ferner einen Schwellwertgenerator und einen damit verbundenen Schwellwertvergleicher umfasst, wobei der Schwellwertgenerator zur Erzeugung eines Schwellwerts eingerichtet ist, der der Rauschleistung des ersten Empfangs-Wellenpulses während einer Echoberuhigungszeit des ersten Empfangs-Wellenpulses entspricht, vorzugsweise zuzüglich einer Sicherheitsmarge, und der Schwellwertvergleicher eingerichtet ist, den Schwellwert mit dem Verlauf des weiteren Empfangs-Wellenpulses zu vergleichen, um die Signalverarbeitungsvorrichtung zum Unterdrücken oder Nullsetzen von Werten des weiteren Empfangs-Wellenpulses unterhalb des Schwellwerts zu veranlassen.

10. Vorrichtung nach Anspruch 9, wobei die Signalverarbeitungsvorrichtung eingerichtet ist, die Laufzeit des nächstliegenden Objekts anhand des ersten Empfangs-Wellenpulses zu erfassen, wobei die Signalverarbeitungsvorrichtung eingerichtet ist, Werte des weiteren Empfangs-Wellenpulses zu unterdrücken, die einer kürzeren Laufzeit als die Laufzeit des nächstliegenden Objekts entsprechen, vorzugsweise abzüglich einer Laufzeit-Sicherheitsmarge.

## Claims

1. Method for detecting an object within a surroundings of a vehicle, having the following steps:
repeated transmission of transmitted wave pulses into the surroundings;
repeated reception of received wave pulses which correspond to the transmitted wave pulses reflected by the object;
detection of the object with the aid of a signal representation of the received wave pulse, and
determining at least one signal characteristic of a first received wave pulse, the detection of the object comprising:
comparing the profile, as the signal characteristic of the first received wave pulse, with the profile of a further received wave pulse which has been received after the first received wave pulse, location information of the object being corrected with the aid of the comparison; or
determining a noise power or propagation time as the signal characteristic of the first received wave pulse,
provision of threshold values as a function of the
noise power or of the propagation time as signal characteristic; and discretization of the profile of a
further received wave pulse in accordance with the threshold values.

2. Method according to Claim 1, in which the profile of the first received wave pulse is compared with the profile of the further received wave pulse, and a difference in the time profile between the first and
the further received wave pulses, a signal strength difference between the first and the further received wave pulse, or both is/are detected, a difference in the time profile representing a difference in the propagation times of the first and the further received wave pulses, and the signal strength difference representing a difference in maximum signal strength of the received wave pulse, or a difference in the signal strength during an echo damping interval of the received wave pulses.

3. Method according to Claim 1 or 2, in which in the comparison of the profile the latter is a value-discrete representation of the value-continuous amplitude profile of a carrier signal or of a baseband signal which represents the received wave pulse, or the profile is a value-discrete representation of the first time derivative of the amplitude profile of the carrier signal or of the baseband signal, and in which in both cases the value-discrete representation has amplitude resolution steps which correspond to the threshold values, and the amplitude resolution steps are distributed linearly or logarithmically.

4. Method according to Claim 3, in which the number of the amplitude resolution steps or of the threshold values is two, three or more than three, the profile preferably being provided as a ternary signal.

5. Method according to one of the preceding claims, in which the noise power or the propagation time is determined as signal characteristic and corresponds to at least one of the thereshold values of the noise power
during an echo damping time or at least to one of the threshold values with the aid of a prescribed mapping of propagation times onto threshold values starting from a propagation time of the first conceived wave pulse, preferably plus a predetermined safety margin,
and in which values of the signal representation of the received wave pulses, in particular of the further received wave pulse, which are smaller than the at least one threshold value are either set to zero or are ignored in the detection of the objects.

6. Method according to one of the preceding claims,
in which the signal representation of the further received wave pulse is provided by an analogue-to-digital converter whose reference signal is provided by a representation of the first received wave pulse, as a result of which the first received wave pulse is already taken into account in the conversion, and the analogue-to-digital converter outputs a signal which corresponds to the further received wave pulse with reference to the first received wave pulse.

7. Method according to one of the preceding claims,
in which the objects are detected with the aid of the signal representation, the signal representation being a representation, filtered by a lowpass filter, of a carrier signal or a baseband signal which represents the received wave pulse.

8. Method according to one of the preceding claims,
in which the transmitted wave pulses are output into the surroundings as ultrasound waves, and the received wave pulses correspond to ultrasound waves which are received from the surroundings.

9. Device for detecting objects in order to execute the method according to one of the preceding claims, comprising: a signal-processing device having a memory, the device comprising an input which is designed to pick up signal representations of the first and the further received wave pulse and lead them to the signal-processing device, the signal-processing device being designed to store the signal representation at least of the first received wave pulse, the signal processing device further comprising a profile comparator (60, 180) which is designed to compare the profile of the first received wave pulse with the profile of the further received wave pulse, and the signal-processing device is designed to correct the location information of the object in accordance with the result from the profile comparator, or the signal-processing device further comprising a threshold-value generator and a threshold-value comparator connected thereto, and the threshold-value generator being designed to generate a threshold value which corresponds to the noise power of the first received wave pulse during an echo damping time of the first received wave pulse, preferably plus a safety margin, and the threshold value comparator is designed to compare the threshold value with the profile of the further received wave pulse in order to prompt the signal-processing device to suppress or nullify values of the further received wave pulse below the threshold value.

10. Device according to Claim 9, in which the signal-processing device is designed to detect the propagation time of the nearest object with the aid of the first received wave pulse, the signal-processing device being designed to suppress values of the further received wave pulse which correspond to a shorter propagation time than the propagation time of the nearest object, preferably minus a propagation time safety margin.

## Revendications

1. Procédé de détection d'un objet présent dans l'environnement d'un véhicule, le procédé présentant les étapes qui consistent à :
émettre de manière répétée dans l'environnement des ondes pulsées d'émission,
recevoir de manière répétée des impulsions d'onde de réception qui correspondent à des impulsions d'onde d'émission réfléchies par l'objet,
détecter l'objet à l'aide d'une représentation du signal des impulsions d'onde de réception et déterminer au moins une propriété du signal d'une première impulsion d'onde de réception, la détection de l'objet comportant les étapes qui consistent à :
comparer l'évolution de la propriété du signal de la première impulsion d'onde de réception à l'évolution d'une autre impulsion d'onde de réception qui a été reçue après la première impulsion d'onde de réception, la comparaison permettant de réguler des informations sur l'emplacement de l'objet ou
déterminer la puissance du bruit ou le temps de parcours comme propriété du signal de la première impulsion d'onde de réception, prévoir des valeurs de seuil en fonction de la puissance de bruit ou du temps de parcours comme propriété du signal et discrétiser l'évolution d'une autre impulsion d'onde de réception en fonction des valeurs de seuil.

2. Procédé selon la revendication 1, dans lequel l'évolution de la première impulsion d'onde de réception est comparée à l'évolution de l'autre impulsion d'onde de réception, la différence entre l'évolution temporelle de la première impulsion d'onde de réception et de l'autre impulsion d'onde de réception, la différence entre l'intensité du signal entre la première impulsion d'onde de réception et l'autre impulsion d'onde de réception ou les deux étant saisies, la différence d'évolution temporelle reflétant une différence de temps de parcours entre la première impulsion d'onde de réception et l'autre impulsion d'onde de réception et la différence d'intensité de signal reflétant la différence entre l'intensité maximale du signal d'impulsion d'onde de réception ou la différence d'intensité de signal pendant la durée qui s'écoule entre deux échos de l'impulsion d'onde de réception.

3. Procédé selon les revendications 1 ou 2, dans lequel lors de la comparaison des évolutions, cette dernière correspond à une représentation en valeurs discrètes de l'évolution continue d'amplitude d'un signal porteur ou d'un signal en bande de base qui correspond à l'impulsion d'onde de réception, l'évolution étant une représentation en valeurs discrètes de la première dérivée par rapport au temps de l'évolution de l'amplitude du signal porteur ou du signal en bande de base, tandis que dans les deux cas, la représentation en valeurs discrètes présente des étages de résolution d'amplitude qui correspondent aux valeurs de seuil, les étages de résolution d'amplitude étant distribués linéairement ou logarithmiquement.

4. Procédé selon la revendication 3,' dans lequel le nombre des étages de résolution d'amplitude ou des valeurs de seuil vaut deux, trois ou plus que trois, l'évolution étant prévue de préférence sous la forme d'un signal ternaire.

5. Procédé selon l'une des revendications précédentes, dans lequel la puissance de bruit ou le temps de parcours est déterminé comme propriété des signaux et correspond à au moins l'une des valeurs de seuil de la puissance de bruit pendant la durée qui s'écoule entre deux échos ou au moins à une des valeurs de seuil, à l'aide d'une représentation prédéterminée des temps de parcours à partir de valeurs de seuil de temps de parcours de la première impulsion d'onde de réception est prévue, de préférence en plus d'une marge de sécurité prédéterminée, des valeurs de la représentation du signal de l'impulsion d'onde de réception, en particulier de l'autre impulsion d'onde de réception, inférieures à la ou aux valeurs de seuil étant mises à zéro ou ignorées lors de la détection des objets.

6. Procédé selon l'une des revendications précédentes, dans lequel la représentation du signal de l'autre impulsion d'onde de réception est réalisée par un convertisseur analogique-numérique dont le signal de référence est constitué d'une représentation de la première impulsion d'onde de réception qui est prise en compte lors de la conversion de la première impulsion d'onde de réception, le convertisseur analogique-numérique délivrant un signal qui correspond à l'autre impulsion d'onde de réception par rapport à la première impulsion d'onde de réception.

7. Procédé selon l'une des revendications précédentes, dans lequel les objets sont détectés à l'aide de la représentation des signaux, la représentation des signaux étant une représentation filtrée passe-bas d'un signal porteur ou d'un signal en bande de base qui correspond à l'impulsion d'onde de réception.

8. Procédé selon l'une des revendications précédentes, dans lequel les impulsions d'onde de réception sont délivrées dans l'environnement sous la forme d'ondes ultrasoniques et dans lequel les impulsions d'onde de réception correspondent à des ondes ultrasoniques reçues par l'environnement.

9. Dispositif de détection d'objets en vue de la mise en oeuvre du procédé selon l'une des revendications précédentes, le dispositif comprenant :
un dispositif de traitement de signaux présentant une mémoire, le dispositif comportant une entrée conçue pour recevoir des représentations de signaux de la première et de l'autre impulsion d'onde de réception et pour les amener à un dispositif de traitement de signaux,
le dispositif de traitement de signaux étant conçu pour conserver en mémoire la représentation du signal d'au moins la première impulsion d'onde de réception,
le dispositif de traitement de signaux comportant en outre un comparateur d'évolution (60, 180) qui est conçu pour comparer l'évolution de la première impulsion d'onde de réception à l'évolution de l'autre impulsion d'onde de réception,
le dispositif de traitement de signaux étant conçu pour réguler l'information de localisation de l'objet en fonction du résultat du comparateur d'évolution,
le dispositif de traitement de signaux comportant en outre un générateur de valeurs de seuil auquel est raccordé un comparateur de valeurs de seuil,
le générateur de valeurs de seuil étant conçu pour former une valeur de seuil qui correspond à la puissance de bruit de la première impulsion d'onde de réception pendant une durée qui s'écoule entre deux échos de la première impulsion d'onde de réception, de préférence avec une marge de sécurité,
le comparateur de valeurs de seuil étant conçu pour comparer la valeur de seuil à l'évolution de l'autre impulsion d'onde de réception pour permettre au dispositif de traitement de signaux d'abaisser ou de mettre à zéro des valeurs de l'autre impulsion d'onde de réception qui sont inférieures à la valeur de seuil.

10. Dispositif selon la revendication 9, dans lequel le dispositif de traitement de signaux est conçu pour saisir le temps de parcours de l'objet le plus proche à l'aide de la première impulsion d'onde de réception, le dispositif de traitement de signaux étant conçu pour abaisser des valeurs de l'autre impulsion d'onde de réception dont le temps de parcours est plus court que le temps de parcours de l'objet le plus proche, de préférence après déduction d'une marge de sécurité sur le temps de parcours.
